# EUROPÄISCHE PATENTANMELDUNG

(11) **EP 4 730 642 A1**
(43) Veröffentlichungstag der Anmeldung: **22.04.2026**
(21) Anmeldenummer: 25209560.9
(22) Anmeldetag: 17.10.2025
(51) Int. Cl.: H02S 20/10, H02S 30/10, F24S 25/61

(54) **PHOTOVOLTAIK-SEGEL**

(30) Priorität: 07.03.2025 CH 252025; 18.10.2024 CH 11312024
(71) Anmelder: Roprod GmbH, 7208 Malans (CH)
(72) Erfinder: Roffler, Corsin, 7208 Malans (CH)
(74) Vertreter: Swisspat Riederer Hasler Patentanwälte AG

(57) **Zusammenfassung**

Die Erfindung betrifft ein Photovoltaik(PV)-Segel (11) umfassend eine Mehrzahl von PV-Modulen (13), bevorzugt vom bifazialen PV-Modulen (13), welche einen handelsüblichen Schichtaufbau mit Solarzellen eingebettet in eine Glasscheibe und Kunststoffschichten und einen Versteifungsrahmen an den Rändern der Rückseite des PV-Moduls (13) aufweisen und Haltelemente (17) zur Befestigung des PV-Segels (11) an einer Haltekonstruktion (43), welche Haltelemente (17) die Mehrzahl von nebeneinander angeordneten PV-Modulen (13) aneinanderhalten. Die Halteelemente sind durch einen mehrteiligen Profilrahmen (17) realisiert, wobei jedes PV-Modul (13) von dem Profilrahmen (17) umlaufend eingefasst ist und jedes PV-Modul (13) beweglich in dem Profilrahmen (17) gehalten ist.

## Beschreibung

### Gebiet der Erfindung

Die Erfindung betrifft Photovoltaik-Segel gemäss Oberbegriff des Anspruchs 1 eine Haltekonstruktion gemäss Oberbegriff des Anspruchs 8, eine Photovoltaik-Anlage gemäss Anspruch 14und ein Verfahren zum Aufbau der Photovoltaik-Anlage gemäss Oberbegriff des Anspruchs 15.

### Stand der Technik

Der Bau von grossen Photovoltaik-Anlagen erfolgt gemäss dem Stand der Technik über mehrere Einzelschritte. Dabei werden die einzelnen Komponenten (Photovoltaik-Module und Rahmenkonstruktion) je einzeln eingekauft und im Zielland der Photovoltaikanlage zu einem Photovoltaik-Segel zusammengefügt. Das Photovoltaik-Segel beinhaltet eine Anzahl Photovoltaik-Module, welche durch Halteelemente aneinandergehalten sind und eine Einheit bilden. Das Zusammenfügen «vor Ort» insbesondere in Hochlohnländern wie den USA, Kanada, oder Europa erhöht die Kosten solcher Solarsegel. Die Kosten der Einzelkomponenten, insbesondere der Photovoltaik (PV)-Module, sind optimiert (Beschaffung von PV-Modulen bzw. PV-Paneelen in Fernost und Transport dieser eng bepackt mittels Containern nach Europa). Jedoch werden bei dem heute üblichen Verfahren nur die Einzelkosten optimiert und nicht die Gesamtkosten des kompletten PV-Segels.

Üblicherweise werden die PV-Module mit örtlichen Klammern geklemmt, um ein stabiles PV-Segel zu bilden. Durch Witterungseinflüsse, beispielsweise im alpinen Bereich, entstehen jedoch unerwünschte Spannungen an den PV-Modulen und deren Rahmen. Diese Spannungen reduzieren die Traglast der PV-Module signifikant.

### Aufgabe der Erfindung

Aus den Nachteilen des beschriebenen Stands der Technik resultiert die Aufgabe, kostenoptimierte PV-Segel zu schaffen, welche dementsprechend eine kostenoptimierte Photovoltaik-Anlage bilden, welche für besonders herausfordernde Witterungseinflüsse und damit für den alpinen Bereich geeignet ist.

### Beschreibung

Die Lösung der gestellten Aufgabe gelingt bei einem PV-Segel durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich dadurch aus, dass die Halteelemente durch einen mehrteiligen Profilrahmen realisiert sind, wobei jedes PV-Modul von dem Profilrahmen umlaufend eingefasst ist und jedes PV-Modul beweglich in dem Profilrahmen gehalten ist. Diese «schwebende» bzw. «schwimmende» Befestigung der PV-Module in den Halterahmen hat den grossen Vorteil, dass die PV-Module weniger mechanisch belastet werden, da sich durch die «schwebende» Lagerung in dem Profilrahmen keine Spannungen in den PV-Modulen aufbauen können. Dadurch wird die PV-Modul Belastung im Betrieb durch Witterungseinflüsse, beispielsweise Wind- und Schneelasten reduziert. Auch während des Transportes der PV-Segel wird die Belastung durch Erschütterungen und Vibrationen reduziert. Die durch die «schwebende» Lagerung zwangsläufig auftretenden Klappergeräusche zwischen PV-Modulen und Profilrahmen werden bewusst in Kauf genommen, da diese bei einer Aufstellung im alpinen Bereich ohne Anrainer nicht stören.

Die umlaufende Halterung jedes PV-Moduls in dem Profilrahmen kann das PV-Segel deutlich höhere Wind- und Schneelasten ertragen als PV-Konstruktionen des Stands der Technik. Die höheren Materialkosten des durchgängigen Profilrahmens werden durch die optimierten Personalkosten, welche weiter unten beschrieben werden, mehr als kompensiert.

In einer bevorzugten Ausführungsform der Erfindung umfasst der Profilrahmen eine Mehrzahl von Vertikalprofilen, welche zwischen benachbarten PV-Modulen und randständig an den äussersten PV-Modulen angeordnet sind und Vertikalseiten der PV-Module einfassen. Dadurch ist jede Vertikalseite der PV-Module durch den Profilrahmen eingefasst und gestützt, was zu einem hohen Belastungsvermögen des PV-Segels beiträgt.

Zweckmässigerweise sind zwei Vertikalprofile innerhalb des PV-Segels nebeneinander angeordnet, ohne dass ein PV-Modul zwischen den beiden benachbarten Vertikalprofilen angeordnet ist. Dadurch kann ein Schattenwurf von einer Haltekonstruktion auf die Rückseite der bifazialen PV-Module vermieden werden, da im Bereich des Schattens kein PV-Module an dem PV-Segel vorhanden ist.

In einer weiteren bevorzugten Ausführungsform der Erfindung umfasst der Profilrahmen ein oberes und ein unteres Horizontalprofil, welche Horizontalprofile die Horizontalseiten der PV-Module einfassen. In Kombination mit den Vertikalprofilen ist jedes PV-Modul vollumfänglich von Profilen eingefasst, wodurch die hohen Wind- und Schneelasten, welche insbesondere bei einer Aufstellung im alpinen Bereich mit widrigen Witterungsverhältnissen von grossem Vorteil sind, resultieren.

In einer weiteren besonders bevorzugten Ausführungsform der Erfindung sind die Vertikalprofile einteilig und weisen einen ersten und einen zweiten Haltebereich auf. Nachdem ein PV-Segel fünf Vertikalprofile aufweist, lassen sich im Vergleich zu zweiteiligen Profilen fünf Profile einsparen, was zu wesentlichen Einsparungen führt. Die PV-Module müssen lediglich in die Vertikalprofile eingeschoben werden, wodurch sich der Aufbau eine PV-Segels sehr einfach gestaltet.

Besonders bevorzugt ist es auch, wenn die Horizontalprofile einteilig sind, wobei das obere und untere Horizontalprofil jeweils einen ersten bzw. einen zweiten Querbalkenteil, einen dritten Haltebereich und einen vierten Haltebereich aufweist. Durch diese Einteiligkeit lassen sich auch die beiden Horizontalprofile kostengünstig herstellen, da sich im Vergleich zu drei ineinander gesteckten Profilen (inkl. dem Querbalken) im Horizontalbereich des PV-Segels zwei Profile an der Ober- und an der Unterseite einsparen lassen und der Aufbau eines PV-Segels rascher erfolgen kann.

In einer weiteren bevorzugten Ausführungsform der Erfindung sind die Vertikalprofile zweiteilig, indem ein Vertikalprofil ein erstes Profilteil und ein zweites Profilteil aufweist, wobei das erste und das zweite Profilteil aneinander beweglich gehalten sind, indem sie ineinandergeschoben sind.

Ferner ist es bevorzugt, wenn die Horizontalprofile ebenfalls zweiteilig sind, indem ein Horizontalprofil ein drittes Profilteil und ein viertes Profilteil aufweist, wobei das dritte und das vierte Profilteil aneinander beweglich gehalten sind, indem sie ineinandergeschoben sind. Das PV-Segel lässt sich durch das Ineinanderschieben der Profilteile besonders rasch und einfach aufbauen. Deshalb lässt sich der Zusammenbau direkt im Produktionsland der PV-Module auch von nicht ausgebildetem Personal bevorzugt beim Hersteller des Profilrahmens, bzw. der Profilteile durchführen. Dies im Gegensatz des Stands der Technik, wo das PV-Segel oftmals erst auf der Baustelle der PV-Anlage zusammengebaut wird. Die Kosteneinsparung ist dementsprechend hoch.

Zweckmässigerweise weisen das zweite und vierte Profilteil wenigstens eine Nut auf, in welcher die Horizontal- bzw. die Vertikalseite eines PV-Moduls mitsamt dem Versteifungsrahmen beweglich aufgenommen ist. In diese Nuten sind die PV-Module einfach einzulegen und die Toleranzen der Nuten sind derart bemasst, dass die PV-Module «schwebend» in den Nuten gelagert sind.

Um die schwebende Lagerung der PV-Module in den Nuten zu realisieren, übersteigt die lichte Weite der Nut die Dicke des PV-Moduls um 0,3 mm bis 0,7 mm und bevorzugt um 0,4 mm bis 0,6 mm.

Von Vorteil ist es, wenn an dem zweiten Profilteil zwei sich gegenüberliegende Nuten vorgesehen sind und benachbarte PV-Module mitsamt dem Versteifungsrahmen in die gegenüberliegenden Nuten beweglich aufgenommen sind. Dadurch können mit dem zweiten Profil zwei benachbarte PV-Module gleichzeitig gehalten werden und der Aufbau des PV-Segels vereinfacht sich entsprechend.

Als vorteilhaft erweist es sich, wenn die Enden der ersten Profilteile mit den dritten Profilteilen des oberen und des unteren Horizontalprofils verbunden sind, bevorzugt indem die ersten Profilteile mit den dritten Profilteilen verschraubt sind. Dadurch lässt sich ein erster stabiler Rahmen rasch aufbauen, an welchen die PV-Module durch Einschieben der zweiten und vierten Profilteile befestigt werden.

In einer weiteren besonders bevorzugten Ausführungsform der Erfindung weist das dritte Profilteil an der dem ersten Profilteil abgewandten Seite ein erstes Halteelement auf, welches mit einem zweiten Halteelement eines oberen Querbalkens oder eines unteren Querbalkens der Haltekonstruktion verbindbar ist. Dadurch lassen sich zwei nebeneinander angeordnete PV-Segel, verbunden durch die beiden Querbalken, besonders rasch zu einer stabilen PV-Segelkonstruktion mit zehn PV-Modulen aufbauen. Zeitintensive und komplizierte Verschraubungen werden auf ein minimales Mass reduziert
In einer weiteren besonders bevorzugten Ausführungsform der Erfindung weist das PV-Segel eine Länge zwischen 5 m und 6 m auf, wodurch das PV-Segel in einem 20-Fuss-Container stehend Platz findet. Die Länge eines 20-Fuss-Containers wird dabei optimal ausgenutzt. Dadurch können die fertig montierten und kostengünstig hergestellten PV-Segel direkt an die Baustelle geliefert werden, ohne dass an der Baustelle ein Aufwand für den Aufbau der PV-Segel notwendig ist. Die PV-Segel können zwar nicht so eng in den Container gepackt werden, wie einzelne PV-Module-Die geringere Transportkapazität wird jedoch durch den Kostenvorteil des Zusammenbaues des PV-Moduls direkt beim Hersteller des Profilrahmen problemlos aufgewogen. Denkbar ist es auch, dass die PV-Segel eine Länge zwischen 11 und 12 m aufweisen und stehend in einem 40-Fuss-Container Platz finden.

Zweckmässigerweise ist der Profilrahmen aus Aluminium hergestellt. Da Aluminium ein stabiles und leichtes Metall ist, welches sich gut durch Strangpressen zu Profilen verarbeiten lässt, ist es das optimale Material für die PV-Segel, welche in bis zu 4 m Höhe an einer Haltekonstruktion befestigt werden. Die Profilteile können auch aus einem anderen Leichtmetall hergestellt sein.

Ein weiterer Aspekt der Erfindung betrifft eine Haltekonstruktion zum Aufbau im freien Gelände und zur Befestigung von wenigstens zwei nebeneinander angeordneten oben beschriebenen PV-Segeln. Die Haltevorrichtung zeichnet sich dadurch aus, dass eine erste obere Haltevorrichtung zur Befestigung von zwei PV-Segeln vorgesehen ist, wobei die erste Haltevorrichtung eine Einhängvorrichtung zum Einhängen der zwei PV-Segel ist. Die zwei PV-Segel können am Boden zu einer PV-Segelkonstruktion aufgebaut werden. In grosser Höhe von mindestens 3 m sind keine weiteren Aufbauarbeiten notwendig, da die PV-Segelkonstruktion durch Anheben mit einem Kran und Einhängen an der Haltekonstruktion fertig montiert ist.

In einer besonders bevorzugten Ausführungsform der Erfindung umfasst die Haltekonstruktion einen ersten oberen Querbalken und einen zweiten unteren Querbalken, welche Querbalken ein zweites Haltelement aufweisen, welche mit den ersten Haltelementen eines dritten Profilteils eines PV-Segels verbindbar sind, wodurch eine PV-Segelkonstruktion aufbaubar ist. Die beiden Querbalken ermöglichen es durch einfache Schiebetechnik zwei PV-Segel nebeneinander anzuordnen und rasch ein PV-Segelkonstruktion mit der doppelten Anzahl an PV-Modulen bereitzustellen.

Bevorzugt ist es, wenn die Einhängvorrichtung zwei erste Hakenelemente umfasst, welche an den oberen Enden der Stützen in einer ersten Höhe angeordnet sind und zwei zweite Hakenelemente umfasst, welche unterhalb der ersten Hakenelemente in einer zweiten Höhe an den Stützen angeordnet sind. Die PV-Segelkonstruktion wird daher an vier Haltepunkten eingehängt, wodurch die Verbindung zwischen der PV-Segelkonstruktion und der Haltekonstruktion auch bei widrigsten Wetterverhältnissen ausreichend stabil ist.

Von Vorteil ist es, wenn die Einhängvorrichtung zwei erste und zwei zweite Einhängplatten umfasst, wobei die ersten Einhängplatten an dem oberen Querbalken befestigt sind und die zweiten Einhängplatten an dem unteren Querbalken befestigt sind, wobei die Einhängplatten erste bzw. zweite Aufnahmen für die Hakenelemente vorgesehen haben, deren lichte Weite grösser als die Breite der Hakenelemente ist. Dadurch ist gewährleistet, dass sich die PV-Segelkonstruktion ungehindert ausdehnen kann, ohne dass Spannungen infolge von Temperaturschwankungen zwischen der PV-Segelkonstruktion und den Stützen entstehen. Die Einhängplatten lassen sich durch einen Kran von oben an den Hakenelementen einhängen und sind durch das Gewicht der PV-Segelkonstruktion automatisch mit der Haltekonstruktion verbunden.

In einer weiteren bevorzugten Ausführungsform der Erfindung sind die Aufnahmen der ersten oder der zweiten Einhängplatten in Richtung ihres unteren Endes aufgeweitet, indem ihre lichte Weite nach unten zunimmt. Dadurch muss die PV-Segelkonstruktion beim Absenken in die Hakenelemente nicht genau über den Hakenelementen abgesenkt werden, sondern wird durch das Absenken automatisch an der Haltekonstruktion zentriert.

Dadurch, dass in bevorzugter Weise an der den Stützen zugewandten Seite der ersten und zweiten Einhängplatten eine elektrisch isolierende Isolierplatte befestigt ist, sind unterschiedliche Metalle der PV-Segelkonstruktion und der Haltekonstruktion voneinander isoliert. Eine Kontaktkorrosion zwischen den unterschiedlichen Metallen ist dementsprechend vermieden.

Bevorzugt ist es, wenn an wenigstens einer der Stützen ein Verriegelungselement vorgesehen ist, welches den unteren Querbalken unlösbar mit den Stützen verbindet. Dadurch ist der einzige Arbeitsschritt in grosser Höhe das Verriegeln der PV-Segelkonstruktion an der Haltekonstruktion. Das Verriegelungselement verhindert zuverlässig ein Aushängen der Einhängplatten aus den Hakenelementen. Beispielsweise ist das Verriegelungselement ein Riegel, welcher eine der unteren Einhängplatten an einer Verriegelungsöffnung durchstösst.

Zweckmässigerweise sind an den Stützen eine zweite untere Haltevorrichtung zur Vormontage einer PV-Segelkonstruktion vorgesehen ist. Die PV-Segelkonstruktion, welche zwei PV-Segel nebeneinander angeordnet hat, lässt sich direkt an der Haltekonstruktion in Bodennähe aufbauen und kann dann fertig aufgebaut in die Endposition direkt an der Haltekonstruktion hochgehoben werden. Denkbar ist es auch die PV-Segelkonstruktion an einem zusätzlichen Ständer vorzumontieren und dann an der Haltekonstruktion einzuhängen.

Als vorteilhaft erweist es sich, wenn die zweite Haltevorrichtung aus zwei an den Stützen befestigte, dritte Hakenelemente besteht, in welche der untere Querbalken eingelegt und dadurch gehalten ist. Die dritten Hakenelemente sind kostengünstige Bauteile und ermöglichen die Vormontage der PV-Segelkonstruktion direkt an der Haltekonstruktion in Bodennähe.

Zweckmässigerweise weisen die zwei Stützen jeweils eine Knickstelle auf und die obere Haltevorrichtung ist oberhalb der Knickstellen angeordnet. Die PV-Segelkonstruktion befindet sich in der Endposition daher in einer optimierten Stellung zur Sonne.

Von Vorteil ist es, wenn an dem oberen Querbalken zwei Hebeelemente befestigt sind, um eine PV-Segel-Konstruktion von der unteren Haltevorrichtung auf die obere Haltevorrichtung heben zu können. Die beiden Hebeelemente lassen sich mit einem Seil oder einer Kette verbinden, an welchen ein Kranhaken angreifen kann.

In einer weiteren Ausführungsform sind die Stützen, die Schrägstützen und der Querträger aus Baustahl hergestellt und die Querbalken sind aus Aluminium hergestellt. Die Haltekonstruktion ist dadurch sehr stabil und witterungsresistent, wohingegen die PV-Segelkonstruktion auch gewichtsoptimiert ist. Durch das geringe Gewicht der PV-Segelkonstruktion ist die Montage der PV-Segelkonstruktion wesentlich einfacher, da bei Kranarbeiten mit Lastwagenkränen die Belastung auf den Boden kleiner werden und die Abstützung des Lastwagenkranes im teilweisen unwegsamen Gelände vereinfacht ist.

Besonders bevorzugt ist es, wenn die Stützen mehrere Stützenteile umfassen und die Stützenteile, die Schrägstützen und der Querträger aneinander gesteckte Profile sind, indem an diesen Profilen Plattennuten vorgesehen sind und in diese Plattennuten Verbindungsplatten eingesteckt sind, wodurch die Haltekonstruktion frei von Schweissnähten ist. Dadurch kann die gesamte Haltekonstruktion aus Aluminium unverschweisst bzw. frei von teuren Schweissnähten hergestellt werden und im Vergleich zu Baustahl 2/3 Gewicht eingespart werden. Das Vermeiden des Schweissens von Aluminium ist wesentlich, da dieses sehr teuer und schwierig in der Ausführung ist. Gerade im alpinen Bereich, wo die Haltekonstruktion durch Helikopterflüge an den Montageort geflogen werden muss, kann eine Gewichtseinsparung von bis zu 66% die Transportkosten signifikant reduzieren.

Zweckmässigerweise sind die Verbindungsplatten, eingesteckt in die Plattennuten, mit den Profilen verschraubt. Dadurch werden biegesteife und stabile Verbindungen erreicht, deren Festigkeit mit der von Schweissnähten vergleichbar ist.

Wie schon im vorletzten Absatz ausgeführt, ist es von Vorteil, wenn die Stützen, die Schrägstützen und der Querträger aus Aluminium hergestellt sind.

Ein weiterer Aspekt der Erfindung betrifft eine Haltekonstruktion zum Aufbau im freien Gelände und zur Befestigung von wenigstens zwei nebeneinander angeordneten oben beschriebenen PV-Segeln. Die Haltevorrichtung zeichnet sich dadurch aus, dass die Stützen mehrere Stützenteile umfassen und die Stützenteile, die Schrägstützen und der Querbalken aneinander gesteckte Profile sind, indem an diesen Profilen Plattennuten vorgesehen sind und in diese Plattennuten Verbindungsplatten eingesteckt sind, wodurch die Haltekonstruktion frei von Schweissnähten ist.

Bevorzugt ist es, wenn eine erste obere Haltevorrichtung zur Befestigung von zwei PV-Segeln vorgesehen ist, wobei die erste Haltevorrichtung eine Einhängvorrichtung zum Einhängen der zwei PV-Segel ist.

Ein weiterer Aspekt der Erfindung betrifft eine PV-Anlage umfassend wenigstens zwei PV-Segel und eine Haltekonstruktion wie oben beschrieben, wobei die zwei PV-Segel nebeneinander an der Haltekonstruktion gehalten sind. Die PV-Segel und die Haltekonstruktion sind optimal aufeinander abgestimmt, wodurch am Aufstellungsort die PV-Segel in kurzer Zeit und für das Montagepersonal gefahrlos an der Haltekonstruktion befestigt werden können und die PV-Anlage sehr rasch in Betrieb genommen werden kann.

In einer besonders bevorzugten Ausführungsform der Erfindung sind die zwei PV-Segel an ihren benachbarten Breitseiten zu einer PV-Segelkonstruktion zusammengesteckt. Dies erfolgt bevorzugt dadurch, dass jeweils ein Steckprofil in die einander zugewandten oberen und unteren Querbalkenteile eingesteckt sind. Die Steckprofile sind mit den Querbalkenteilen verschraubt. Dadurch kann direkt an die Baustelle in kurzer Zeit aus zwei PV-Segeln eine PV-Segelkonstruktion aufgebaut werden

Noch ein Aspekt der Erfindung betrifft ein Verfahren zum Aufbau der beschriebenen PV-Anlage aufweisend die folgenden Schritte:
(a) Aufbau eines PV-Segels gemäss der obigen Beschreibung an einer Produktionsstätte mit geringen Lohnkosten, wobei der Aufbau das Ineinanderschieben der ersten und zweiten Profilteile, das Ineinanderschieben der dritten und vierten Profilteile, das Verbinden der ersten und dritten Profilteile und das Einstecken der PV-Module in die zweiten und vierten Profilteile umfasst,
(b) Beladen eines 40-Fuss-Containers mit bis zu 50 PV-Segeln oder eines 20-Fuss-Containers mit bis zu 25-PV-Segeln in stehender Ausrichtung,
(c) Transport des Containers mit Schiff, Bahn und LKW bis zur Entladung der PV-Segel,
(d) Transport der PV-Segel zum Aufbauort der PV-Anlage, beispielsweise im alpinen Bereich,
(e) Aufbau der Haltekonstruktion und
(f) Befestigen wenigstens eines PV-Segels an der Haltekonstruktion.

Wie weiter oben bereits beschrieben, lassen sich die PV-Segel direkt beim Hersteller des Profilrahmens durch die Profil-Schiebetechnologie rasch und einfach durch ungelerntes Personal aufbauen. Vorab werden die PV-Module an den Hersteller des Profilrahmens geliefert. Dementsprechend kostengünstig lassen sich die PV-Segel produzieren. Die Länge der PV-Segel ist an einen 20-Fuss- bzw. einen 40-Fuss-Container angepasst. In den Container werden die PV-Segel aufrechtstehend transportiert. Am Aufbauort müssen die PV-Segel nur mehr an der Haltekonstruktion befestigt werden.

Die Erfindung zeichnet sich auch bevorzugt dadurch aus, dass der Verfahrensschritt (f) folgende Aufbauschritte umfasst:
(f1) Einlegen eines unteren Querbalkens in die dritten Hakenelemente oder in eine separate Aufbauvorrichtung auf dem Baugelände,
(f2) Einschieben wenigstens eines PV-Segels in den unteren Querbalken, wobei das erste Halteelement des dritten unteren Profilteils mit dem zweiten Halteelement des unteren Querbalkens formschlüssig zusammenwirkt,
(f3) Fixieren des dritten unteren Profilteils an dem unteren Querbalken,
(f4) Einschieben des oberen Querbalkens, wobei das erste Halteelement des dritten oberen Profilteils mit dem zweiten Halteelement des oberen Querbalkens formschlüssig zusammenwirkt,
(f5) Fixieren des dritten oberen Profilteils an dem oberen Querbalken, wodurch der Aufbau einer PV-Segelkonstruktion (65) abgeschlossen ist,
(f6) Anheben der PV-Segelkonstruktion (65) an den Hebeelementen aus der unteren Haltevorrichtung aus einer Montageposition und Einhängen an der Einhängvorrichtung in einer Endposition und
(f7) Verriegeln des unteren Querbalkens an wenigstens einer Stütze mit einem Verriegelungselement.

Die PV-Segelkonstruktion lässt sich ebenfalls durch eine Profil-Schiebetechnologie rasch und einfach aufbauen. Dabei ist es bevorzugt, wenn zwei PV-Segel nebeneinander von den beiden Querbalken gehalten sind, welche auf die PV-Segel aufgeschoben werden. Die PV-Segelkonstruktion muss lediglich in die Endposition an der Haltekonstruktion gehoben werden und dort fixiert werden, um den Aufbau der PV-Anlage abzuschliessen. Arbeiten in grosser Höhe beschränken sich auf das Verriegeln des unteren Querbalkens an den Stützen.

Die Erfindung zeichnet sich auch besonders bevorzugt dadurch aus, dass der Verfahrensschritt f anstatt der Schritte f1 bis f5 die folgenden Aufbauschritte umfasst:
(f1) Einsetzen eines ersten und zweiten PV-Segels in eine Aufbauvorrichtung, wobei die PV-Segel einen ersten und zweiten Querbalkenteil aufweisen und
(f2) Zusammenstecken der beiden PV-Segel mit Hilfe eines Steckprofils in die einander zugewandten offenen Stirnseiten des ersten und zweiten Querbalkenteils. Diese Ausführungsform ist möglich, wenn die Horizontalprofile einteilig sind und anstatt der Querbalken die Querbalkenteile der Horizontalprofile vorhanden sind. Dann kann eine PV-Segelkonstruktion sehr rasch an einer Aufbauvorrichtung durch Zusammenstecken benachbarter Querbalkenteile mittels Steckprofilen aufgebaut werden.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Frontansicht eines PV-Segels;
- Figur 2:: eine Draufsicht auf ein PV-Segel;
- Figur 3:: eine Seitenansicht auf das PV-Segel in einer ersten Ausführungsform, wobei zusätzliche Querbalken einer Haltekonstruktion strichliert dargestellt sind;
- Figur 4:: eine Frontansicht einer PV-Anlage mit einem PV-Segel gehoben von einer Montageposition in eine Endposition an der Haltekonstruktion;
- Figur 5:: eine Frontansicht der PV-Anlage mit dem PV-Segel in der Endposition;
- Figur 6:: eine Seitenansicht der PV-Anlage;
- Figur 7:: eine Detailansicht einer Einhängvorrichtung an der Haltekonstruktion;
- Figur 8:: eine Schnittdarstellung entlang der Schnittlinie VIII-VIII aus Figur 7;
- Figur 9:: eine Schnittdarstellung entlang der Schnittlinie IX-IX aus Figur 7;
- Figur 10:: eine Detailansicht des unteren Querbalkens in der Montageposition.
- Figur 11:: eine Seitenansicht auf das PV-Segel in einer zweiten Ausführungsform mit einem oberen und unteren Querbalkenteil;
- Figur 12:: eine Draufsicht auf das PV-Segel in einer zweiten Ausführungsform;
- Figur 13:: eine Detailansicht zweier Vertikalprofile aus Figur 13;
- Figur 14:: ein Steckprofil zum Zusammenstecken von zwei PV-Segeln;
- Figur 15:: eine zweite Ausführungsform der Haltekonstruktion in einer perspektivischen Ansicht;
- Figur 16 & 17:: Detailansichten einer Verbindung einer linken und rechten Stütze mit einem Querträger innerhalb der Kreise in Figur 15;
- Figur 18:: eine Seitenansicht einer Knickstelle der rechten Stütze und einen Schnitt durch den Querträger und
- Figur 19:: einen Schnitt durch eine Seitenstütze.

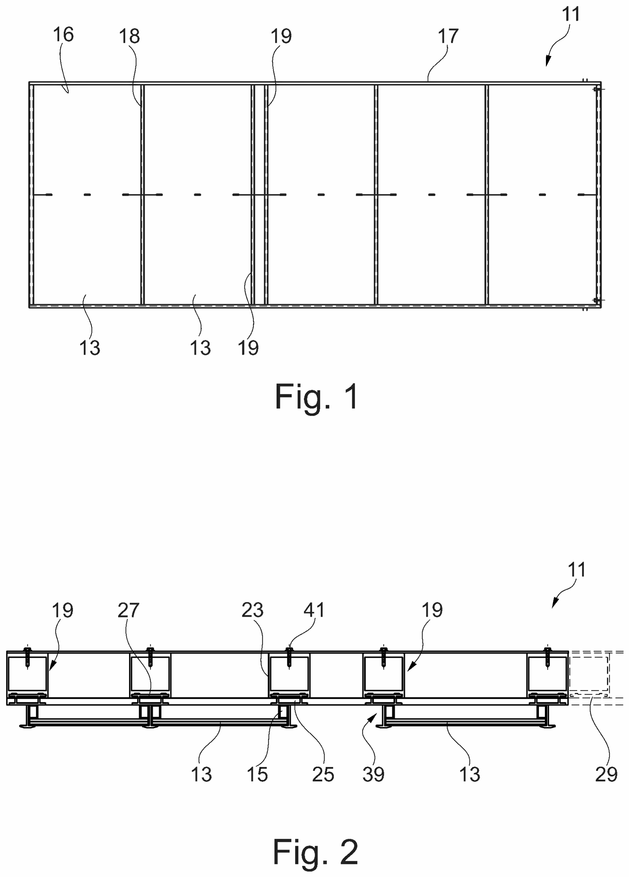

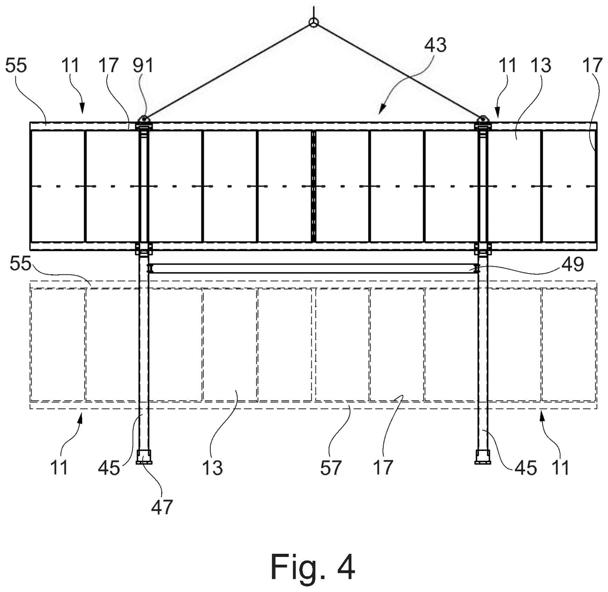

In den Figuren 1 bis 8 und 10, 11 und 12 ist ein Photovoltaik(PV)-Segel gezeigt, welches gesamthaft mit dem Bezugszeichen 11 bezeichnet ist. Als PV-Segel wird im Rahmen dieser Patentanmeldung eine Mehrzahl von handelsüblichen Photovoltaik(PV)-Modulen 13 verstanden, welche nebeneinander durch Halteelemente nebeneinander gehalten sind. Ein handelsübliches PV-Modul 13 besitzt einen Schichtaufbau. Dabei sind Solarzellen eingebettet in eine Glasscheibe und Kunststoffschichten. Ein Versteifungsrahmen 15 ist Teil des PV-Moduls 13 und ist an der Rückseite des PV-Moduls angeordnet. Bevorzugt sind die PV-Module bifazial. Demnach sind Solarzellen an beiden Oberflächen des PV-Moduls 13 angeordnet.

Die Halteelemente sind durch einen mehrteiligen Profilrahmen 17 realisiert. Der Profilrahmen fasst alle Breit- und Längsseiten bzw. Horizontalseiten 16 und Vertikalseiten 18 der PV-Module 13 ein, wodurch das PV-Segel 11 eine sehr grosse mechanische Stabilität erhält. Dadurch kann das PV-Segel 11 hohe Wind- und Schneelasten ertragen und ist dementsprechend für die Verwendung im alpinen Bereich besonders gut geeignet.

Der Profilrahmen 17 weist Vertikalprofile 19 in einer ersten Ausführungsform auf, welche die Horizontalseiten 16 der PV-Module 13 umfassen. Ferner weist der Profilrahmen 17 ein oberes und ein unteres Horizontalprofil 21a,21b auf, welche die Horizontalseiten 16 der PV-Module 13 umfassen. Die Vertikalprofile 19 sind zwischen benachbarten PV-Modulen 13 und randständig an den äussersten PV-Modulen 13 angeordnet. Auch ist es möglich zwei Vertikalprofile 19 nebeneinander anzuordnen, ohne dass zwischen diesen beiden Vertikalprofilen 19 ein PV-Modul 13 angeordnet ist. Dadurch ist ein Schattenwurf einer hinter dem PV-Segel angeordneten Stütze bedeutungslos für die bifazialen PV-Module 13.

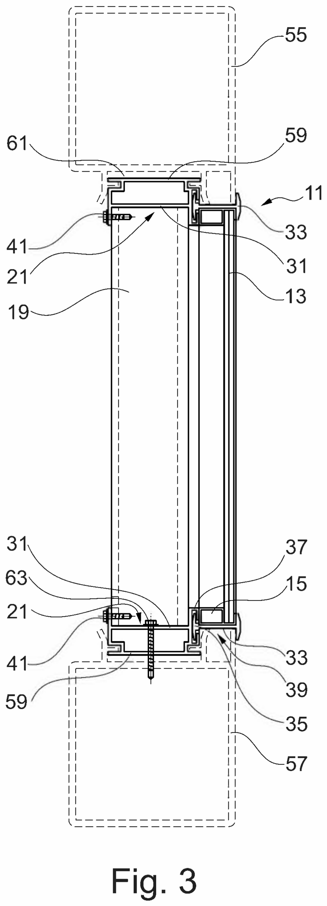

Die Vertikalprofile 19 sind in der ersten Ausführungsform zweiteilig ausgeführt, indem diese ein erstes und ein zweites Profilteil 23,25 aufweisen, welche ineinander verschiebbar sind, um aneinander gehalten zu sein. Beispielsweise kann das zweite Profilteil 25 ein im Querschnitt erstes T-förmiges Ende 27 aufweisen, das mit einer ersten T-förmigen Nut 29 des ersten Profilteils 23 formschlüssig zusammenwirkt (Figur 2). Ebenso sind die Horizontalprofile 21a,21b in einer ersten Ausführungsform zweiteilig und weisen ein drittes und viertes Profilteil 31,33 auf (Figur 3). Gleich wie bei den Vertikalprofilen 19 kann das vierte Profilteil 33 ein im Querschnitt zweites T-förmiges Ende 35 aufweisen, das mit einer zweiten T-förmigen Nut 37 des dritten Profilteils 31 formschlüssig zusammenwirkt. Das zweite und das vierte Profilteil weisen jeweils gegenüberliegende Nuten 39 auf, in welche die Seiten eines PV-Moduls 13 mitsamt dem Verstärkungsrahmen 15 beweglich aufgenommen sind. D.h. die PV-Module sind in den Nuten 39 nicht eingeklemmt und besitzen auch keine weitere Befestigung an dem Profilrahmen 17. Bevorzugt ist ein Spielraum zwischen den PV-Modulen 13 und den Nuten 39 von 0,5 mm. Dadurch sind die PV-Module 13 spannungsfrei in dem Profilrahmen 17 gehalten und thermische Verformungen sowie Fertigungstoleranzen der PV-Modul-Abmessungen können kompensiert werden, ohne dass mechanische Spannungen die PV-Module 13 oder den Profilrahmen 17 belasten.

Die Enden der ersten Profilteile 23 sind an den dritten Profilteilen 31 mit ersten Schrauben 41 verschraubt. Das PV-Segel 11 ist in seiner Länge derart dimensioniert, dass es in einem 20-Fuss-Standarcontainer stehend Platz findet. Es versteht sich, dass auch die Höhe des PV-Segels 11 an die Höhe eines 20-Fuss-Containers angepasst ist. Beispielsweise besitzt ein PV-Segel 11 eine Länge von 6 Metern und hat 5 nebeneinander angeordnete PV-Module 13. Zwei PV-Segel 11 können auch hintereinanderstehend in einem 40-Fuss-Container eingestellt werden. Dadurch kann ein 20-Fuss-Container mit bis zu 25 PV-Segeln 11 beladen werden und ein 40 Fuss-Container mit bis zu 50 PV-Segeln 11. Bevorzugt sind die Profilteile 23,25,31,33 aus rohem oder anodisiertem Aluminium gefertigt, insbesondere stranggepresst.

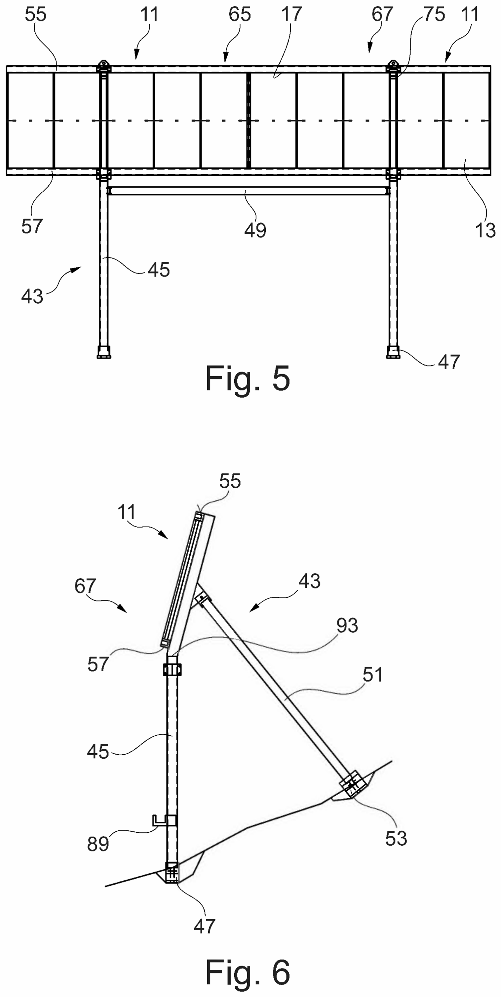

Zwei PV-Segel 11 sind dazu vorgesehen nebeneinander an einer Haltekonstruktion 43 befestigt zu werden. Die Haltekonstruktion 43 umfasst zwei Stützen 45, welche mit ihren ersten unteren Enden 47 im Erdreich einbetoniert sind. Ein Querträger 49 verbindet die beiden Stützen 47, welche ihrerseits von zwei Schrägstützen 51 gestützt werden. Die Schrägstützen weisen zweite untere Enden 53 auf, welche ebenfalls im Erdreich einbetoniert sind (Figur 6). Diese Bauteile sind aus Baustahl gefertigt.

Die Haltekonstruktion 43 umfasst einen ersten oberen Querbalken 55 und einen zweiten unteren Querbalken 57, welche aus Aluminium gefertigt sind. Die dritten Profilteile 31 lassen sich auf die Querbalken 55,57 aufschieben. Beispielsweise kann das dritte Profilteil 31 ein im Querschnitt drittes T-förmiges Ende 59 aufweisen, das mit einer dritten T-förmigen Nut 61 des ersten oder zweiten Querbalkens 55,57 formschlüssig zusammenwirkt (Figur 3). Der obere und unter Querbalken 55,57 haben eine derartige Länge, dass sich zwei PV-Segel 11 hintereinander auf den unteren Querbalken 57 aufschieben lassen. Der obere Querbalken 55 wird dann auf die dritten Profilteile 31 der beiden PV-Segel 11 aufgeschoben. Die dritten Profilteile 31 werden an den Querbalken 55,57 durch zweite Schrauben 63 fixiert. Dadurch entsteht eine stabile PV-Segelkonstruktion 65 mit bis zu 12 Meter Länge, welche sich mit einem Kran anheben und bewegen lässt. Die zwei PV-Segel 11 bilden zusammen mit der Haltekonstruktion 43 eine PV-Anlage 67.

An der Haltekonstruktion 43 ist eine Einhängvorrichtung 69 vorgesehen, welche es ermöglicht, dass die Querbalken 55,57 an den Stützen 45 eingehängt werden können. Die Einhängvorrichtung 69 umfasst zwei erste Hakenelemente 71 und zwei zweite Hakenelemente 73. Die ersten Hakenelemente 71 sind an den oberen Enden 75 der Stützen 45 in einer ersten Höhe angeordnet. Die zweiten Hakenelemente 73 sind unterhalb der ersten Hakenelemente 71 in einer zweiten Höhe an den Stützen 45 angeordnet.

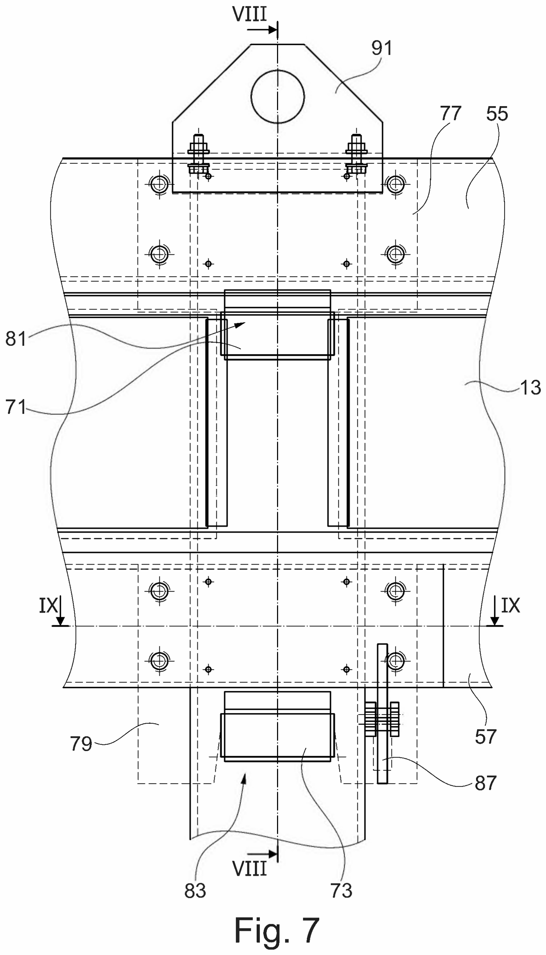

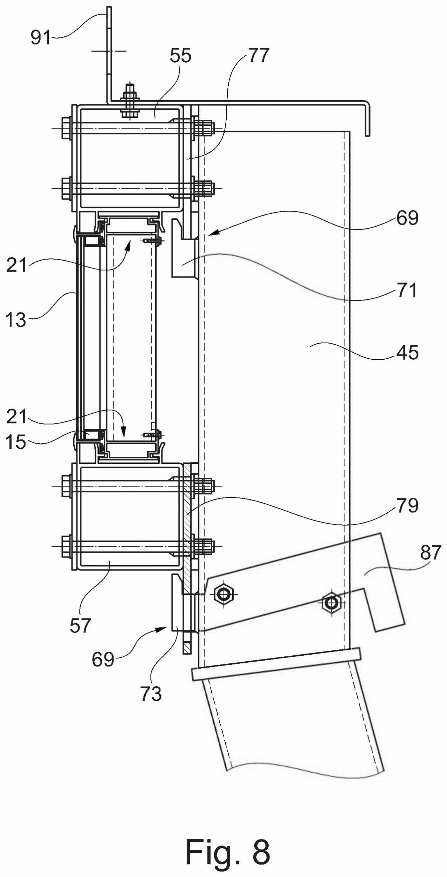

Die Einhängvorrichtung 69 umfasst auch zwei erste Einhängplatten 77 und zwei zweite Einhängplatten 79. Die zwei ersten Einhängplatten 77 sind an dem oberen Querbalken 55 befestigt und die zwei zweiten Einhängplatten 79 sind an dem unteren Querbalken 57 befestigt. Die Einhängplatten 77,79 haben erste bzw. zweite Aufnahmen 81,83 für die Hakenelemente vorgesehen. In der Figur 7 und 8 ist gezeigt, dass die Einhängplatten 77,79 in die Hakenelemente 71,73 eingehängt sind. Die zweiten unteren Aufnahmen 83 sind aufgeweitet, damit sich der untere Querbalken 57 und demzufolge auch der obere Querbalken 55 beim Einhängen der PV-Segelkonstruktion 65 zentriert.

An den den Stützen 45 zugewandten Seiten der Einhängplatten 77,79 sind elektrisch isolierende Isolierplatten 85 befestigt. Damit ist Kontaktkorrosion zwischen den unterschiedlichen Metallen verhindert.

In der eingehängten Position ist die PV-Segelkonstruktion 65 an den Stützen 45 Durch zwei Verriegelungselemente 87 verriegelt, damit sie sich nicht lösen kann. Die Verriegelungselemente 87 sind an den Stützen 45 angeschraubt und ragen in einer Verschlussposition in die zweiten Einhängplatten.

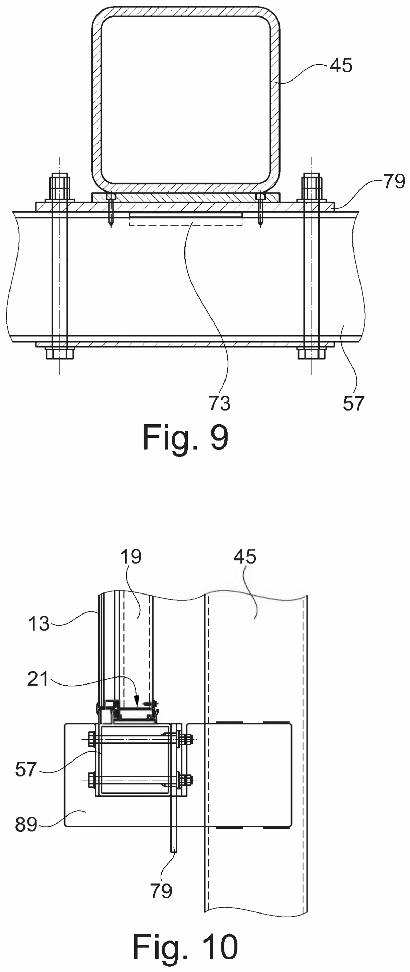

Die PV-Segelkonstruktion 65 lässt sich an den Stützen 45 in einer niedrigeren Position aufbauen. Dadurch sind Arbeiten in grosser Höhe auf das Einhängen der PV-Segelkonstruktion 65 beschränkt. Zur Vormontage bzw. zum Aufbau der PV-Segelkonstruktion 65 ist an den Stützen 45 eine Haltevorrichtung in Gestalt von zwei dritten Hakenelementen 89 vorgesehen (Figur 6 und 10), welche an einer niedrigen Position an den Stützen 45 befestigt sind. In die dritten Hakenelemente 89 lässt sich der untere Querbalken 57 einlegen und die PV-Segelkonstruktion 65 kann in dieser Position aufgebaut werden.

An dem oberen Querbalken 55 sind zwei Hebeelemente 91 befestigt sind, um die PV-Segelkonstruktion 65 von der unteren Haltevorrichtung 89 auf die obere Haltevorrichtung 69 heben zu können. Die Stützen 45 können eine Knickstelle 93 aufweisen. Dadurch ist die PV-Segelkonstruktion 65 in einer bevorzugten geneigten Position zur Sonne positioniert.

Die oben beschriebene PV-Anlage 65 wird gemäss den folgenden Verfahrensschritten aufgebaut:
Der Aufbau der PV-Segel 11 ist an einer Produktionsstätte mit geringen Lohnkosten vorgesehen. Dadurch können die erhöhten Materialkosten, die der umlaufende mehrteilige Profilrahmen 17 mit sich bringt, mehr als kompensiert werden. Der Aufbau eines PV-Segels 11 findet bevorzugt beim Hersteller des Profilrahmens 17 statt, an welchen die mit hoher Automatisierung gefertigten Standard-PV-Module 11 geliefert werden. Dabei ist es von Vorteil, wenn die Transportwege der PV-Module 11 möglichst kurz sind. Der Aufbau beinhaltet das Ineinanderschieben der ersten und zweiten Profilteile 23,25, das Ineinanderschieben der dritten und vierten Profilteile 31,33, das Verbinden der ersten und dritten Profilteile 23,31 und das Einstecken der (bifazialen) PV-Module 13 in die zweiten und vierten Profilteile 25,33. Das Ineinanderschieben der Profilteile 23,25,31,33 und das Einstecken der bevorzugt 5 PV-Module 11 in die Nuten 39 stellt eine einfache Arbeit dar, die auch von ungelernten Arbeitskräften kostengünstig durchgeführt werden kann. Nach dem Aufbau der PV-Segel 11 werden bis zu 50 PV-Segel in einen 40-Fuss-Containers oder bis zu bis zu 25-PV-Segeln in einen 20-Fuss-Containers in stehender Ausrichtung geladen. Der Container wird mit Schiff, Bahn und LKW bis zur Entladung der PV-Segel transportiert und dann werden die PV-Segel zum Aufbauort der PV-Anlage, beispielsweise im alpinen Bereich befördert. Am Aufbauort wird die Haltekonstruktion 43 aufgebaut und die Stützen 45 und Schrägstützen 51 in das Erdreich einbetoniert. Die Vormontage bzw. der Aufbau der PV-Segelkonstruktion 65 kann wie weiter oben beschrieben an den dritten Hakenelementen 89 erfolgen, welche sich in einer niedrigen Höhe an den Stützen 45 befinden. Die Vormontage kann aber auch an einer separaten Aufbauvorrichtung auf dem Baugelände erfolgen. Zuerst wird der untere Querbalken 57 in die dritten Hakenelemente 89 oder in die separate Aufbauvorrichtung eingelegt. Dann werden zwei PV-Segel 11 hintereinander in den unteren Querbalken 57 eingeschoben, wobei das erste Halteelement 59 des dritten unteren Profilteils 31 mit dem zweiten Halteelement 61 des unteren Querbalkens 57 formschlüssig zusammenwirkt. Der dritte untere Profilteil 31 wird an dem unteren Querbalken 57 mit zweiten Schrauben 63 festgeschraubt. Im nächsten Aufbauschritt wird der obere Querbalken 55 auf die zwei PV-Segel aufgeschoben, wobei das erste Halteelement 59 des dritten oberen Profilteils 31 mit dem zweiten Halteelement 61 des oberen Querbalkens 55 formschlüssig zusammenwirkt. Auch diese Teile werden mit zweiten Schrauben 63 fixiert und der Aufbau der PV-Segelkonstruktion 65 ist abgeschlossen.

Mit einem Kran wird die PV-Segelkonstruktion 65 an den Hebeelementen 65 aus der unteren Haltevorrichtung 89 aus der Montageposition gehoben und an der Einhängvorrichtung 69 in einer Endposition eingehängt. Durch Verriegeln des unteren Querbalkens 57 an wenigstens einer Stütze 45 mit dem Verriegelungselement 87 wird der Aufbau abgeschlossen.

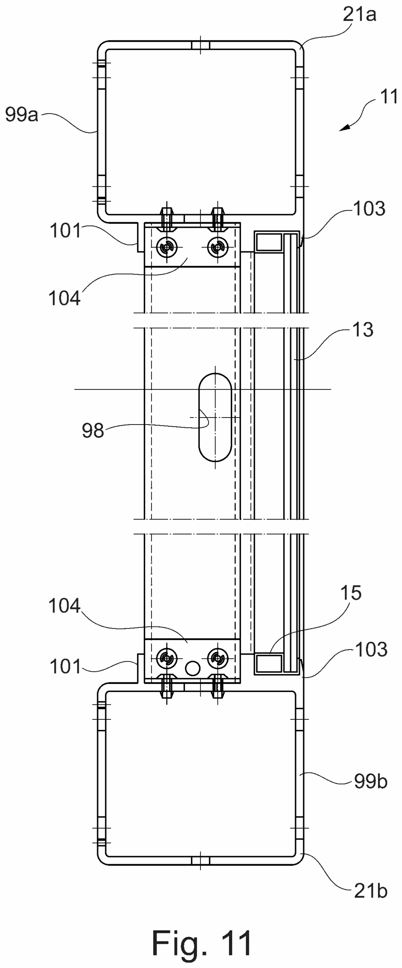

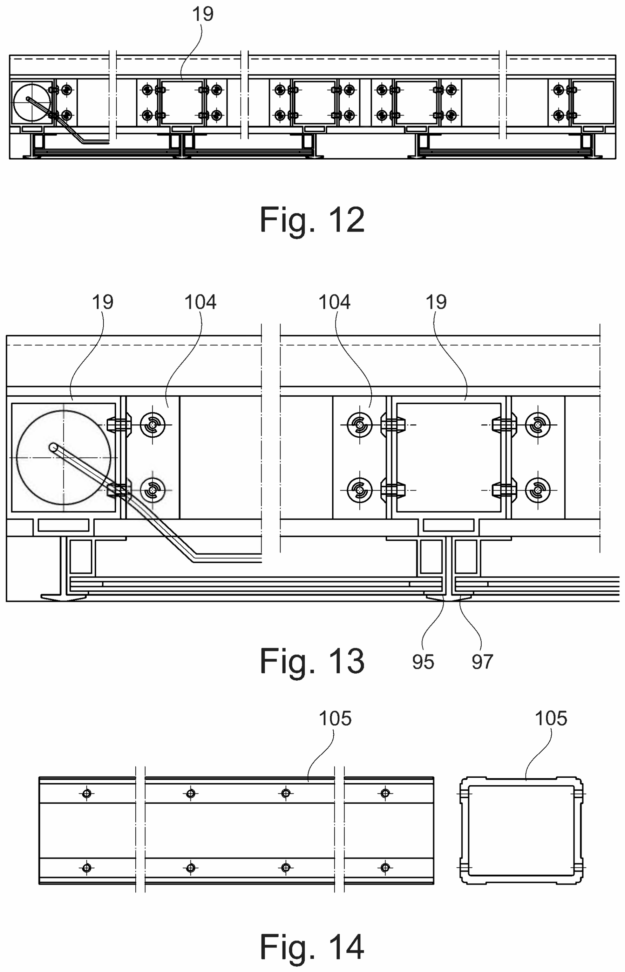

In den Figuren 11 bis 13 sind zweite Ausführungsformen der Horizontalprofile 21a,21b und der Vertikalprofile 19 gezeigt. Die Vertikalprofile 19 sind einteilig und umfassen einen ersten und zweiten Haltebereich 95,97 auf (Figuren 12 und 13). In die Haltebereiche 95,97 sind die PV-Module 13 mitsamt den Versteifungsrahmen 15 aufgenommen. An den Vertikalprofilen 19 sind Durchführungen 98 vorgesehen, um die Kabel der PV-Module 13 gut verlegen zu können.

Auch das obere und untere Horizontalprofil 21a, 21b sind einteilig ausgeführt. Deshalb weist das untere und obere Horizontalprofil 21a,21b jeweils einen ersten und zweiten Querbalkenteil 99a,99b und einen dritten und einen vierten Haltebereich 101, 103 auf (Figur 11). In den dritten Haltebereich 101 sind die Vertikalprofile 19 eingesteckt und beispielsweise mit Winkeln mit den Horizontalprofilen 21a,21b verschraubt. In den vierten Halteteil 103 sind die PV-Module 13 mitsamt den Versteifungsrahmen 15 aufgenommen.

Die Querbalkenteile 99a,99b, welche Teile der Horizontalprofile 21a,21b gemäss der zweiten Ausführungsform sind, ersetzen den oberen und unteren Querbalken 55,57. Demnach wird die Funktion der Querbalken 55,57 der Haltekonstruktion 43 auf das PV-Segel 11 übertragen. Die einteiligen Vertikalprofile 19 und die einteiligen Horizontalprofile sind in der Produktion wesentlich günstiger als die mehrteiligen Profile gemäss der ersten Ausführungsform. In Summe werden anstatt 5 Profilen 23,25,31,33,55 nur zwei Profile 21a und 19 benötigt. Es versteht sich, dass sich diese Einsparung an Profilen für die gesamte PV-Anlage summiert. Nachdem sich im Gegensatz zu den Querbalken 55,57 die Horizontalprofile 21a,21b der zweiten Ausführungsform nur über die Länge eines PV-Segels 11 und nicht über die Länge von zwei benachbarten PV-Segeln 11 erstrecken, müssen benachbarte obere bzw. untere Horizontalprofile 21a,21b miteinander verbunden werden. Dazu werden Steckprofile 105, wie in Figur 14 gezeigt, in die offenen einander zugewandten Stirnseiten benachbarter Querbalkenteile 99a,99b eingesteckt und mit den Querbalkenteilen 21a,21b verschraubt. Dadurch wird aus den zwei PV-Segeln 11 die PV-Segelkonstruktion 65.

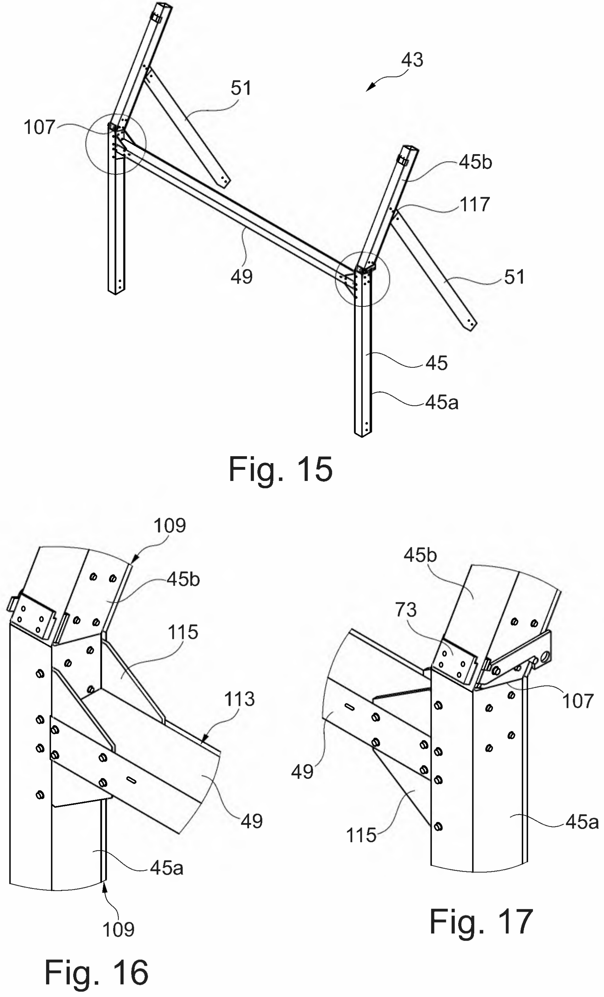

Wenn die Haltekonstruktion 43 aus Baustahl gefertigt ist, so ist es zweckmässig die einzelnen Bauteile der Haltekonstruktion miteinander zu verschweissen. In den Figuren 15 bis 19 ist eine Ausführungsvariante gezeigt bei der die einzelnen Bauteile aneinander formschlüssig gehalten und verschraubt sind. Durch diese Verbindungsform lässt sich das Verschweissen der Bauteile verhindern. Dadurch kann Aluminium als Werkstoff für die Haltekonstruktion 43 verwendet werden. Das sehr teuer Schweissen von Aluminium kann verhindert werden. Durch die Verwendung von Aluminium wird das Gewicht der Bauteile deutlich reduziert, wodurch die Transportkosten gesenkt werden können. Insbesondere, wenn die Haltekonstruktion 43 im alpinen Gelände aufgebaut wird und ein Transport mit einem Helikopter notwendig ist, ist das geringere Gewicht des Aluminiums im Vergleich zu Baustahl ein grosser Vorteil.

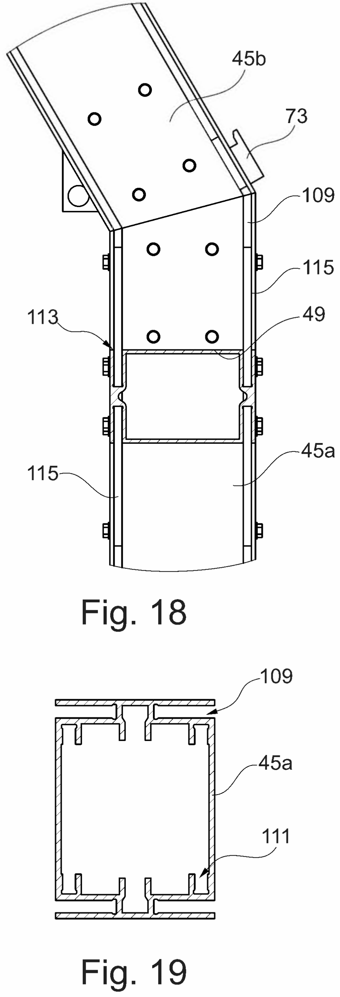

Die Stützen 45 bestehen aus mehreren Stützenteilen 45a,45b an deren Verbindungsstelle ein Knick 107 vorgesehen sein kann. An den Stützenteilen 45a befindet sich die Montageposition und an den Stützenteilen 45b befindet sich die Endposition der PV-Segelkonstruktion 65. Ein Querschnitt der Stützenteile 45a,45b ist in Figur 19 gezeigt. Die Stützenteile 45a,45b weisen erste und zweite Plattennuten 109,111 auf. In die zweiten Plattennuten 111 werden erste abgewinkelte Verbindungsplatten gesteckt, deren Winkel dem Winkel des Knicks 107 entspricht. Um eine zuverlässige biegesteife Verbindung der Stützenteile zu erhalten, werden die Stützenteile 45a,45b mit den ersten Verbindungsplatten verschraubt.

Auch der Querträger 49 wird mit den beiden Stützenteilen 45a durch eine Nuten-Platten-Verbindung biegesteif verbunden. Dazu sind an dem Querträger 49 dritte Plattennuten 113 vorgesehen. In die ersten und dritten Plattennuten sind zweite Verbindungsplatten 115 eingesteckt. Für eine zuverlässige biegesteife Verbindung sind die zweiten Verbindungsplatten 115 mit den ersten Stützenteilen 45a und dem Querträger 49 verschraubt (Figuren 15 bis 18).

Die Schrägstützen 51 sind mit dritten Verbindungsplatten 117 mit den zweiten Stützenteilen 45b verbunden. Die dritten Verbindungsplatten 117 sind an den zweiten Stützenteilen 45b und den Schrägstützen 51 angeschraubt.

Grundsätzlich werden die in den letzten Abschnitten beschrieben PV-Segel 11 in gleicher Weise wie die PV-Segel mit Profilen gemäss der ersten Ausführungsform aufgebaut. Allerdings ist es nicht notwendig die Querbalken 55,57 mit den PV-Segeln 11 zu verbinden, denn die Horizontalprofile 21a,21b sind einteilig und besitzen bereits ein Querbalkenteil 99a,99b. Dafür müssen die zwei PV-Segel 11 in der Montageposition mit den Steckprofilen 105 zu einer PV-Segelkonstruktion 65 zusammengesteckt werden. Dann wird die PV-Segelkonstruktion 65 in die Endposition gehoben.

Ein «Flattern» der PV-Module 11 in dem Profilrahmen 17 durch den bestmöglichen Verzicht auf Verschraubungen und Verklemmungen wird bewusst in Kauf genommen, da die entstehenden Klappergeräusche im alpinen Bereich nicht stören. Die PV-Module 11 sind im Gegensatz zum Stand der Technik flächig «schwebend» in dem Profilrahmen gelagert. Auf verschraubte Fixierung an üblicherweise 4 Fixationspunkten wird verzichtet. Die schwebende Lagerung reduziert die PV-Modulbelastung sowohl während des Transports (Erschütterungen und Vibrationen), als auch im späteren Betrieb (Windlast, Schneelast). In überraschender Weise führt Schnee und Eis, welches sich zwischen den PV-Modulen 11 und den Nuten 39 sammelt, nicht zu Spannungsbelastung und anderen Gefrierphänomen, sondern bricht durch die «Flatterbewegung» der PV-Module 11 wieder auf.

### Legende:

- 11: PV-Segel
- 13: PV-Modul (bifazial)
- 15: Versteifungsrahmen
- 16: Horizontalseiten
- 17: mehrteiliger Profilrahmen
- 18: Vertikalseiten
- 19: Vertikalprofile
- 21a,21b: Oberes und unteres Horizontalprofil
- 23: Erstes Profilteil
- 25: Zweites Profilteil
- 27: Erstes T-förmiges Ende
- 29: Erste T-förmige Nut
- 31: Drittes Profilteil
- 33: Viertes Profilteil
- 35: Zweites T-förmiges Ende
- 37: Zweite T-förmige Nut
- 39: Nut
- 41: Erste Schrauben
- 43: Haltekonstruktion
- 45,45a,45b: Stützen, Stützenteile
- 47: Erste untere Enden
- 49: Querträger
- 51: Schrägstützen
- 53: Zweite untere Enden
- 55: Erster oberer Querbalken
- 57: Zweiter unterer Querbalken
- 59: Drittes T-förmiges Ende, erstes Halteelement
- 61: Dritte T-förmige Nut, zweites Halteelement
- 63: Zweite Schrauben
- 65: PV-Segelkonstruktion
- 67: PV-Anlage
- 69: Einhängvorrichtung, erste obere Haltevorrichtung
- 71: Erste Hakenelemente
- 73: Zweite Hakenelemente
- 75: Obere Enden der Stützen
- 77: Erste Einhängplatten
- 79: Zweite Einhängplatten
- 81: Erste Aufnahmen
- 83: Zweite Aufnahmen
- 85: Isolierplatten
- 87: Verriegelungselemente
- 89: Dritte Hakenelemente, zweite untere Haltevorrichtung
- 91: Hebeelemente
- 93: Knickstelle
- 95: Erster Haltebereich
- 97: Zweiter Haltebereich
- 98: Durchführungen
- 99a,99b: Erster und zweiter Querbalkenteil
- 101: Dritter Haltebereich
- 103: Vierter Haltebereich
- 104: Winkel
- 105: Steckprofil
- 107: Knick an den Stützen
- 109: Erste Plattennuten
- 111: Zweite Plattennuten
- 113: Dritte Plattennuten
- 115: Zweite Verbindungsplatten
- 117: Dritte Verbindungsplatten

## Patentansprüche

1. Photovoltaik(PV)-Segel (11) umfassend
eine Mehrzahl von PV-Modulen (13), bevorzugt vom bifazialen PV-Modulen (13), welche einen handelsüblichen Schichtaufbau mit Solarzellen eingebettet in eine Glasscheibe und Kunststoffschichten und einen Versteifungsrahmen an den Rändern der Rückseite des PV-Moduls (13) aufweisen und
Haltelemente (17) zur Befestigung des PV-Segels (11) an einer Haltekonstruktion (43), welche Haltelemente (17) die Mehrzahl von nebeneinander angeordneten PV-Modulen (13) aneinanderhalten,
**dadurch gekennzeichnet,**
**dass** die Halteelemente durch einen mehrteiligen Profilrahmen (17) realisiert sind, wobei
- jedes PV-Modul (13) von dem Profilrahmen (17) umlaufend eingefasst ist und
- jedes PV-Modul (13) beweglich in dem Profilrahmen (17) gehalten ist.

2. PV-Segel nach Anspruch 1, **dadurch gekennzeichnet, dass** der Profilrahmen eine Mehrzahl von Vertikalprofilen (19) umfasst, welche zwischen benachbarten PV-Modulen (13) und randständig an den äussersten PV-Modulen (13) angeordnet sind und Vertikalseiten (18) der PV-Module (13) einfassen.

3. PV-Segel nach einem der Ansprüche 1 oder 2, **dadurch gekennzeichnet, dass** der Profilrahmen (17) ein oberes und ein unteres Horizontalprofil (21a,21b) umfasst, welche Horizontalprofile (21a,21b) die Horizontalseiten (16) der PV-Module (13) einfassen und dass die Vertikalprofile (19) einteilig sind und einen ersten und einen zweiten Haltebereich (95,97) aufweisen oder dass die Vertikalprofile (19) zweiteilig sind, indem ein Vertikalprofil (19) ein erstes Profilteil (23) und ein zweites Profilteil (25) aufweist, wobei das erste und das zweite Profilteil (23,25) aneinander beweglich gehalten sind, indem sie ineinandergeschoben sind.

4. PV-Segel nach Anspruch 3, **dadurch gekennzeichnet, dass** die Horizontalprofile (21a,21b) einteilig sind, wobei das obere und untere Horizontalprofil (21a,21b) jeweils einen ersten bzw. einen zweiten Querbalkenteil (99a,99b), einen dritten Haltebereich (101) und einen vierten Haltebereich (103) aufweist oder dass die Horizontalprofile (21a,21b) zweiteilig sind, indem ein Horizontalprofil (21a,21b) ein drittes Profilteil (31) und ein viertes Profilteil (33) aufweist, wobei das dritte und das vierte Profilteil (31,33) aneinander beweglich gehalten sind, indem sie ineinandergeschoben sind.

5. PV-Segel nach Anspruch 4, **dadurch gekennzeichnet, dass** das zweite und vierte Profilteil (25,33) wenigstens eine Nut (39) aufweisen, in welcher die Horizontal- bzw. die Vertikalseite (16,18) eines PV-Moduls (13) mitsamt dem Versteifungsrahmen (15) beweglich aufgenommen ist und dass die lichte Weite der Nut (39) die Dicke des PV-Moduls (13) um 0,3 mm bis 0,7 mm und bevorzugt um 0,4 mm bis 0,6 mm übersteigt.

6. PV-Segel nach Anspruch 5, **dadurch gekennzeichnet, dass** an dem zweiten Profilteil (25) zwei sich gegenüberliegende Nuten (39) vorgesehen sind und benachbarte PV-Module (13) mitsamt dem Versteifungsrahmen (15) in den gegenüberliegenden Nuten (39) beweglich aufgenommen sind.

7. PV-Segel nach einem der Ansprüche 4 bis 6, **dadurch gekennzeichnet, dass** das dritte Profilteil (31) an der dem ersten Profilteil (23) abgewandten Seite ein erstes Halteelement (59) aufweist, welches mit einem zweiten Halteelement (61) eines oberen Querbalkens (55) oder eines unteren Querbalkens (57) der Haltekonstruktion (43) verbindbar ist.

8. Haltekonstruktion (43) zum Aufbau im freien Gelände und zur Befestigung von wenigstens zwei nebeneinander angeordneten PV-Segeln (11) gemäss einem der vorangehenden Ansprüche umfassend
- wenigstens zwei Stützen (45), deren erste untere Enden (47) im Erdreich befestigbar sind
- wenigstens einem Querträger (49), welcher die Stützen (45) verbindet,
- wenigstens zwei Schrägstützen (51), welche die Stützen (45) abstützen und deren zweite unteren Enden (53) im Erdreich befestigbar sind,
**dadurch gekennzeichnet,**
eine erste obere Haltevorrichtung (69) zur Befestigung von zwei PV-Segeln (11) vorgesehen ist, wobei die erste Haltevorrichtung eine Einhängvorrichtung (69) zum Einhängen der zwei PV-Segel (11) ist.

9. Haltekonstruktion nach Anspruch 8, **dadurch gekennzeichnet, dass** die Haltekonstruktion (43) einen ersten oberen Querbalken (55) und einen zweiten unteren Querbalken (57) umfasst, welche Querbalken (55,57) zweite Haltelemente (61) aufweisen, welche mit den ersten Haltelementen (59) eines dritten Profilteils (31) eines PV-Segels (11) verbindbar sind, wodurch eine PV-Segelkonstruktion (65) aufbaubar ist.

10. Haltekonstruktion nach Anspruch 8 oder 9, **dadurch gekennzeichnet, dass** die Einhängvorrichtung (69) zwei erste Hakenelemente (71) umfasst, welche an den oberen Enden (75) der Stützen (45) in einer ersten Höhe angeordnet sind und zwei zweite Hakenelemente (73) umfasst, welche unterhalb der ersten Hakenelemente (71) in einer zweiten Höhe an den Stützen (45) angeordnet sind und dass die Einhängvorrichtung (69) zwei erste und zwei zweite Einhängplatten (77,79) umfasst, wobei die ersten Einhängplatten (77) an dem oberen Querbalken (55) befestigt sind und die zweiten Einhängplatten (79) an dem unteren Querbalken (57) befestigt sind, wobei die Einhängplatten (77,79) erste bzw. zweite Aufnahmen (81,83) für die ersten und zweiten Hakenelemente (71,73) vorgesehen haben.

11. Haltekonstruktion nach einem der Ansprüche 9 oder 10, **dadurch gekennzeichnet, dass** die Stützen (45), die Schrägstützen (51) und der Querträger (49) aus Baustahl hergestellt sind oder aus Aluminium hergestellt sind und die Querbalken (55,57) aus Aluminium hergestellt sind, wobei
die Stützen (45) mehrere Stützenteile (45a,45b) umfassen und die Stützenteile (45a,45b), die Schrägstützen (53) und der Querträger (49) aneinander gesteckte Profile sind, indem an diesen Profilen Plattennuten (109,111,113) vorgesehen sind und in diese Plattennuten (109,111,113) Verbindungsplatten (115,117) eingesteckt sind, wodurch die Haltekonstruktion (43) frei von Schweissnähten ist.

12. Haltekonstruktion (43) zum Aufbau im freien Gelände und zur Befestigung von wenigstens zwei nebeneinander angeordneten PV-Segeln (11) gemäss einem der vorangehenden Ansprüche umfassend
- wenigstens zwei Stützen (45), deren erste untere Enden (47) im Erdreich befestigbar sind
- wenigstens einem Querträger (49), welcher die Stützen (45) verbindet,
- wenigstens zwei Schrägstützen (51), welche die Stützen (45) abstützen und deren zweite unteren Enden (53) im Erdreich befestigbar sind,
**dadurch gekennzeichnet,**
**dass** die Stützen (45) mehrere Stützenteile (45a,45b) umfassen und die Stützenteile (45a,45b), die Schrägstützen (53) und der Querträger (49) aneinander gesteckte Profile sind, indem an diesen Profilen Plattennuten (109,111,113) vorgesehen sind und in diese Plattennuten (109,111,113) Verbindungsplatten (115,117) eingesteckt sind, wodurch die Haltekonstruktion (43) frei von Schweissnähten ist.

13. Haltekonstruktion nach Anspruch 12, **dadurch gekennzeichnet, dass** eine erste obere Haltevorrichtung (69) zur Befestigung von zwei PV-Segeln (11) vorgesehen ist, wobei die erste Haltevorrichtung eine Einhängvorrichtung (69) zum Einhängen der zwei PV-Segel (11) ist.

14. PV-Anlage (67) umfassend wenigstens zwei PV-Segel (11) gemäss der Ansprüche 1 bis 13 und eine Haltekonstruktion (43) gemäss einem der Ansprüche 14 bis 25, wobei zwei PV-Segel (11) nebeneinander an der Haltekonstruktion (43) gehalten sind, wobei die zwei PV-Segel (11) an ihren benachbarten Breitseiten zu einer PV-Segelkonstruktion (65) zusammengesteckt sind und das Zusammenstecken der beiden benachbarten PV-Segel (11) dadurch erfolgt, dass jeweils ein Steckprofil (105) in die einander zugewandten oberen und unteren Querbalkenteile (99a,99b) eingesteckt sind.

15. Verfahren zum Aufbau einer PV-Anlage nach Anspruch 14 aufweisend die folgenden Verfahrensschritte:
(a) Aufbau eines PV-Segels (11) gemäss einem der Ansprüche 1 bis 13 an einer Produktionsstätte mit geringen Lohnkosten, wobei der Aufbau das Ineinanderschieben der ersten und zweiten Profilteile (23,25), das Ineinanderschieben der dritten und vierten Profilteile (31,33), das Verbinden der ersten und dritten Profilteile (23,31) und das Einstecken der PV-Module (13) in die zweiten und vierten Profilteile (25,33) umfasst,
(b) Beladen eines 40-Fuss-Containers mit bis zu 50 PV-Segeln (11) oder eines 20-Fuss-Containers mit bis zu 25 PV-Segeln (11) in stehender Ausrichtung,
(c) Transport des Containers mit Schiff, Bahn und LKW bis zur Entladung der PV-Segel (11),
(d) Transport der PV-Segel (11) zum Aufbauort der PV-Anlage (67), beispielsweise im alpinen Bereich,
(e) Aufbau der Haltekonstruktion (43) und
(f) Befestigen wenigstens eines PV-Segels (11) an der Haltekonstruktion(43).

16. Verfahren nach Anspruch 15, **dadurch gekennzeichnet, dass** der Verfahrensschritt (f) folgende Aufbauschritte umfasst:
(f1) Einlegen eines unteren Querbalkens (57) in die dritten Hakenelemente (89) oder in eine separate Aufbauvorrichtung auf dem Baugelände,
(f2) Einschieben wenigstens eines PV-Segels (11) in den unteren Querbalken (57), wobei das erste Halteelement (59) des dritten unteren Profilteils (31) mit dem zweiten Halteelement (61) des unteren Querbalkens (57) formschlüssig zusammenwirkt,
(f3) Fixieren des dritten unteren Profilteils (31) an dem unteren Querbalken (57), (f4) Einschieben des oberen Querbalkens (55), wobei das erste Halteelement (59) des dritten oberen Profilteils (31) mit dem zweiten Halteelement (61) des oberen Querbalkens (55) formschlüssig zusammenwirkt,
(f5) Fixieren des dritten oberen Profilteils (31) an dem oberen Querbalken (55), wodurch der Aufbau einer PV-Segelkonstruktion (65) abgeschlossen ist,
(f6) Anheben der PV-Segelkonstruktion (65) an den Hebeelementen (91) aus der unteren Haltevorrichtung (89) aus einer Montageposition und Einhängen an der Einhängvorrichtung (69) in einer Endposition und
(f7) Verriegeln des unteren Querbalkens (57) an wenigstens einer Stütze (45) mit einem Verriegelungselement (87),
oder dass der Verfahrensschritt (f) folgende Aufbauschritte umfasst:
(f1) Einsetzen eines ersten und zweiten PV-Segels (11) in eine Aufbauvorrichtung, wobei die PV-Segel einen ersten und zweiten Querbalkenteil (99a,99b) aufweisen,
(f2) Zusammenstecken der beiden PV-Segel (11) mit Hilfe eines Steckprofils (105) in die einander zugewandten offenen Stirnseiten des ersten und zweiten Querbalkenteils (99a,99b);
(f6) Anheben der PV-Segelkonstruktion (65) an den Hebeelementen (91) aus der Aufbauvorrichtung und Einhängen an der Einhängvorrichtung (69) in einer Endposition und
(f7) Verriegeln des unteren Querbalkens (57) an wenigstens einer Stütze (45) mit einem Verriegelungselement (87).
